Europäisches Patentamt

European Patent Office

Office européen des brevets

(11) Numéro de publication : **0 524 885 B1**

(12) **FASCICULE DE BREVET EUROPEEN**

(45) Date de publication du fascicule du brevet :
02.03.94 Bulletin 94/09

(51) Int. Cl.⁵ : **G01C 19/72**

(21) Numéro de dépôt : **92402133.0**

(22) Date de dépôt : **23.07.92**

(54) Gyromètre interférométrique à modulateur électro-optique.

(30) Priorité : **25.07.91 FR 9109447**

(43) Date de publication de la demande :
**27.01.93 Bulletin 93/04**

(45) Mention de la délivrance du brevet :
**02.03.94 Bulletin 94/09**

(84) Etats contractants désignés :
**DE ES GB IT**

(56) Documents cités :
**EP-A- 0 463 594
DE-A- 3 123 163
FR-A- 2 555 739**

(73) Titulaire : **SOCIETE D'APPLICATIONS
GENERALES D'ELECTRICITE ET DE
MECANIQUE SAGEM
6, Avenue d'Iéna
F-75783 Paris Cédex 16 (FR)**

(72) Inventeur : **Rochereau, Jacques
28 Rue Vigneronde
F-95100 Argenteuil (FR)**
Inventeur : **Leclercq, Claude
14 Grande Rue, Frouville
F-95690 Nesles la Vallee (FR)**

(74) Mandataire : **Fort, Jacques
CABINET PLASSERAUD 84, rue d'Amsterdam
F-75009 Paris (FR)**

EP 0 524 885 B1

Jouve, 18, rue Saint-Denis, 75001 PARIS

## Description

L'invention concerne les gyromètres du type comportant un guide diélectrique d'onde en anneau ; une source d'ondes électromagnétiques munie d'un séparateur pour envoyer dans l'anneau deux ondes contrarotatives provenant de la source ; un détecteur d'interférence recevant les ondes contrarotatives ; des premiers moyens électro-optiques commandés pour donner aux ondes une modulation périodique alternative et symétrique de phase, à une période sensiblement double du temps de parcours de l'anneau, placés en amont de l'anneau pour une onde et en aval pour l'autre ; des seconds moyens attaqués par un générateur de rampe de déphasage de pente réglable, placés en amont de l'anneau pour une onde et en aval pour l'autre ; et des moyens électroniques de bouclage et de mesure commandant le sens et la valeur de la pente de la rampe pour annuler le déphasage des ondes reçues par le détecteur d'interférence.

Il existe de très nombreux documents décrivant des gyromètres du type ci-dessus défini, dont le guide diélectrique est généralement une fibre optique constituant une bobine de quelques centaines de spires. Voir, par exemple, DE-A-3 123 163. Ces gyromètres sont basés sur l'effet Sagnac : lorsque deux ondes polarisées rectilignes provenant de la même source et contrarotatives sont injectées dans une bobine de fibre puis combinées au niveau d'un détecteur, les chemins optiques sont égaux lorsque le gyromètre est fixe. La puissance reçue par le détecteur est alors maximum. Si en revanche la bobine tourne à vitesse $\Omega$ autour de son axe, les ondes parcourent deux chemins optiques différents, ce qui se traduit par un déphasage $\phi_s$ :

$$\phi_s = (4\Pi\, LR)\, \Omega\, /\, \lambda_0\, c_0$$

où L est la longueur totale de la fibre, R le rayon de la bobine, $\lambda_0$ la longueur d'onde dans le vide et $c_0$ la vitesse de la lumière dans le vide.

La puissance instantanée P reçue par le détecteur est alors ; $P = P_0/2\, (1 + \cos \phi_s)$ ;
où $P_0$ est la puissance reçue en l'absence de rotation.

Un gyromètre réalisé de façon à fournir $\phi_s$ par simple mesure de $P/P_0$ serait dans la pratique inutilisable. Les gyromètres du type ci-dessus défini écartent deux défauts importants du montage de principe.

Un premier défaut est dû à ce que $P/P_0$ varie de façon faible et non linéaire, puisque $\cos \phi_s$ varie peu lorsque $\phi_s$ est proche de zéro. Les premiers moyens électro-optiques du gyromètre mentionné ci-dessus amènent le point de mesure dans une zone où le facteur d'échelle est élevé et la variation de signal en fonction de la vitesse sensiblement linéaire. Ces moyens modulateurs reçoivent un signal de modulation, souvent qualifié de "dither" ayant une période à peu près double du temps $\tau$ de parcours de l'anneau (c'est-à-dire du temps de propagation dans la fibre optique) et une amplitude correspondant approximativement à une variation de phase $\Pi/2$. Ce décalage de phase est appliqué en premier à une des ondes, en second à l'autre du fait de la propagation dans la fibre, puisque les moyens modulateurs sont placés en amont de la fibre pour une onde et en aval pour l'autre. Le gyromètre est ainsi polarisé alternativement à peu près au point de demi-intensité de chaque côté du maximum de la frange d'interférences.

Un second défaut est que, dans sa constitution de base, le gyromètre n'est pas un appareil de zéro. Dans les gyromètres du type ci-dessus défini, ce défaut est écarté en introduisant un déphasage non réciproque, c'est-à-dire n'ayant pas le même effet sur les deux ondes contrarotatives $\phi_r$ entre les deux ondes, de façon à avoir $\phi_s + \phi_r = 0$. Le déphasage $\phi_r$, ou phase réglante, est généré à l'aide d'une rampe de déphasage linéaire appliquée à des moyens de rampe de déphasage en optique intégrée placés en amont de l'anneau pour une onde et en aval pour l'autre. La rampe est réglable pour annuler $\phi_s + D_r$. La phase d'une onde est ainsi décalée avant qu'elle ne parcoure la bobine tandis que l'autre est décalée après qu'elle ait parcouru la bobine, ce qui se traduit par un décalage de phase entre les ondes égal à la différence entre deux rampes identiques décalées temporellement de la durée du parcours de l'anneau.

Le déphasage $\phi_r$ entre les deux ondes, provoqué par les rampes linéaires décalées du temps $\tau$ de propagation dans la fibre, est constant et proportionnel à la pente de la rampe, dont le sens dépend du signe de la vitesse d'entrée $\Omega$.

Dans les gyromètres existants du type ci-dessus défini, la rampe est remise à zéro à l'issue de chaque intervalle de temps correspondant à une variation de phase réglante de $2\Pi$, ce qui ramène la mesure de vitesse angulaire $\Omega$ à une mesure de la fréquence f des retours à 0. La pente de la rampe est ajustée pour avoir $\phi_s + \phi_r = 0$, donc $\phi_s = 2\Pi\tau / T$. La fréquence des remises à zéro est alors de $2R\Omega / n\lambda_0$. Il suffit que le générateur de rampe fournisse, à chaque retour à zéro, un signal sur une sortie pour un sens de rotation, un signal sur une autre sortie pour l'autre sens de rotation. On dispose ainsi de la vitesse par mesure de fréquence ou comptage du nombre d'impulsions apparaissant sur l'une ou l'autre des sorties par unité de temps.

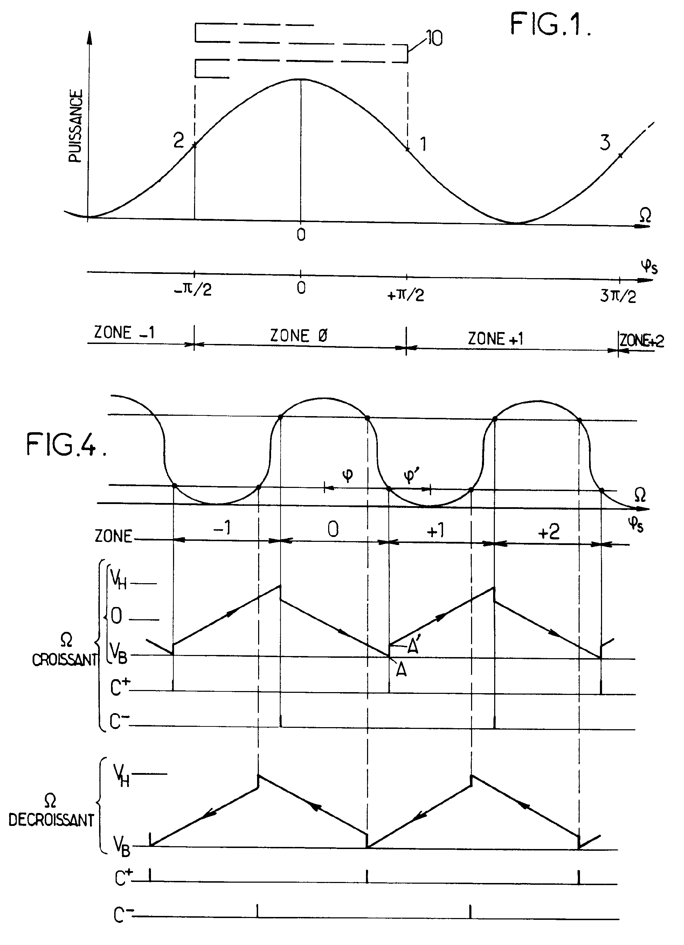

Ce mode de fonctionnement est illustré sur la figure 1, qui donne la variation du déphasage en fonction de la vitesse $\Omega$ dans le cas d'un fonctionnement à boucle ouverte. Le signal de modulation correspond, transposé en vitesse, à l'oscillation 10 montrée en tirets. Les moyens électroniques de bouclage constituent un asservissement qui maintiendrait le point de fonctionnement en O en l'absence de "dither".

Cette solution est satisfaisante pour les vitesses relativement faibles. Mais elle conduit à des fréquences f de retour à zéro proportionnelles à la vitesse. L'invention vise notamment à fournir un gyromètre permettant, sans dégradation de la résolution angulaire, de limiter la fréquence des retours à zéro de la rampe, aux vitesses élevées.

Dans ce but, l'invention propose un gyromètre du type ci-dessus défini caractérisé par des moyens pour inverser la pente de la rampe de déphasage, c'est-à-dire changer le signe de la phase réglante $\phi_r$, dès que $\phi_r$ dépasse + $\Pi/2$ ou - $\Pi/2$ et par des moyens pour compter algébriquement les changements de signe de la phase.

Grâce à cette disposition, la rampe n'a jamais une fréquence de retour à zéro supérieure à $1/4\tau$, ce qui est favorable étant donné que les commutations de remise à zéro de la rampe sont susceptibles de perturber la détection.

Les moyens de comptage algébrique peuvent être constitués par un simple compteur décompteur. Les moyens pour changer le signe de la phase réglante sont avantageusement prévus pour effectuer ce changement, c'est-à-dire inverser la pente de la rampe, pendant les périodes de remise à zéro, c'est-à-dire pendant les brefs instants nécessaires à la détection.

L'invention sera mieux comprise à la lecture de la description qui suit d'un mode particulier de réalisation, donné à titre d'exemple non limitatif. La description se réfère aux dessins qui l'accompagnent, dans lesquels :

- la figure 1, déjà mentionnée, est un diagramme montrant la variation de phase en fonction de la vitesse de rotation, dans le cas d'un gyromètre non asservi ;
- la figure 2 est un schéma de principe d'un gyromètre à fibre optique, de constitution générale connue mais modifié pour permettre de mettre en oeuvre l'invention ;
- la figure 3 est un synoptique montrant une constitution possible d'un générateur de rampe conforme à un mode de réalisation particulier de l'invention ;
- les figures 4 et 5 montrent l'allure des signaux qui apparaissent en différents points des synoptiques des figures 3 et 4 ;
- la figure 6 est un graphe de fonctionnement.

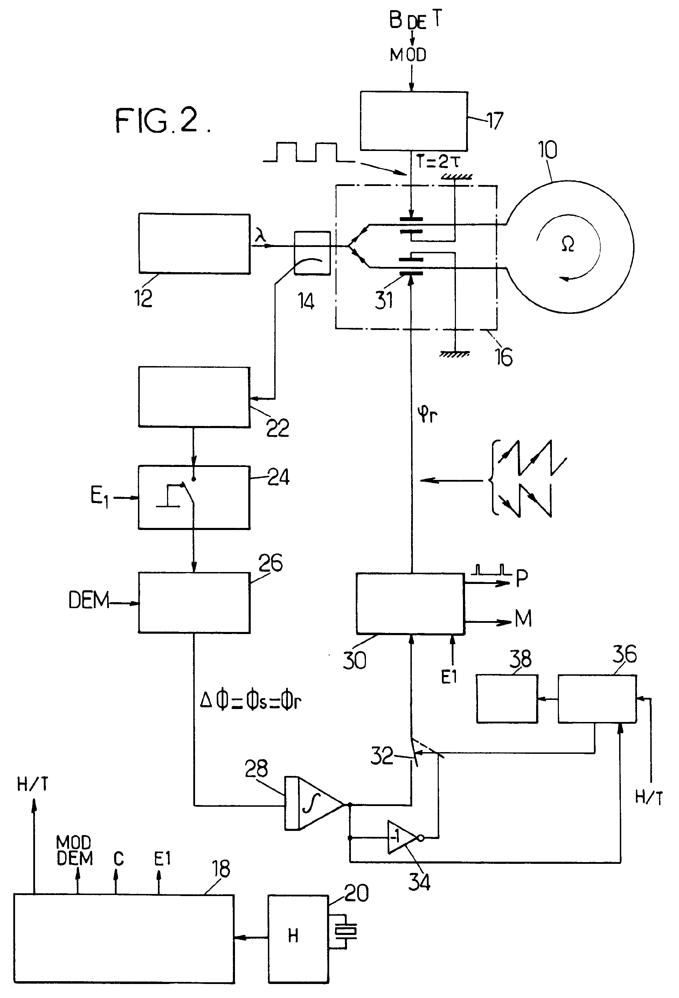

Le gyromètre montré en figure 2 a une constitution générale qui est connue et en conséquence ne sera que sommairement décrite. Il comprend un guide diélectrique en anneau 10, constitué généralement par une bobine de fibre optique monomode, pouvant avoir de 100 à 1 000 mètres de longueur avec un rayon de l'ordre du centimètre. Une source 12 de lumière cohérente et à polarisation linéaire, telle qu'une diode laser, alimente les deux extrémités de la fibre par l'intermédiaire d'un ensemble en optique intégrée 16. Un dérivateur 14 placé entre la source 12 et l'optique intègre permet de récupérer la puissance fournie par des ondes qui ont parcouru en sens inverses le guide en anneau 10.

L'ensemble en optique intégrée comprend un séparateur envoyant une puissance égale vers les deux extrémités de la fibre. Il comporte également des moyens modulateurs de phase électro-optiques, recevant, d'un circuit modulateur 17, un signal électrique périodique, alternatif à période à peu près double du temps $\tau$ du parcours de l'anneau (temps dont les variations avec la vitesse de rotation $\Omega$ sont négligeables), dont l'amplitude est telle qu'elle provoque une commutation de phase optique de $\Pi/2$, comme indiqué en tirets sur la figure 1.

Ce signal amène les points de mesure dans des zones où la sensibilité et la linéarité sont maximales. Dans un gyromètre de type connu, le point de fonctionnement est alors alternativement en 1 et 2.

Le signal périodique peut notamment être carré et être synchronisé par un signal MOD provenant d'une base de temps 18 qui reçoit un signal à fréquence fixe d'une horloge 20.

Le produit de l'interférence des ondes contrarotatives qui ont traversé la bobine est envoyé par le dérivateur 14 vers une chaîne de mesure et de bouclage. La chaîne représentée comprend un module 22 de détection, de préamplification et d'adaptation d'impédance suivi d'un commutateur analogique 24 et d'un démodulateur 26. Ces modules reçoivent des signaux de commande et de référence $E_1$ et DEM fournis par la base de temps 18.

Le signal continu démodulé, qui constitue un signal d'écart $\Delta\phi = \phi_s + \phi_r$, est appliqué à un intégrateur 28 alimentant une entrée de commande de pente d'un générateur analogique de rampe 30. Ce générateur 30 attaque un des moyens déphaseurs électro-optiques 31 placés sur une extrémité de l'anneau. Sur la figure 2, les moyens déphaseurs 31 sont distincts du déphaseur de modulation et placés à l'extrémité opposée de l'anneau. Mais ils pourraient être placés à la même extrémité et même confondus avec lui.

Dans les gyromètres connus, le générateur 30 est prévu pour fournir, sur une sortie P ou M, suivant le sens de la rampe, une impulsion à chaque remise à zéro (dès que la rampe atteint une amplitude correspondant à un déphasage optique de $2\Pi$ dans les gyromètres connus).

La fréquence des impulsions sur la sortie P ou M est alors représentative de la vitesse angulaire, chaque impulsion correspondant à un angle de rotation donné $\theta = n\lambda_0 / 2R$ ; on a $\Omega = \lambda_0 nf / 2R$, où f est la fréquence des impulsions en M ou P (1).

Conformément à l'invention, on inverse la pente de la rampe suivante lorsque la valeur absolue de la phase réglante $\phi_R$ dépasse $\Pi/2$. Cette inversion peut notamment être faite de façon simple en inversant le gain à la sortie de l'intégrateur 28, comme cela est représenté sur la figure 2, où un commutateur 32, constitué en général par un élément à état solide, permet de relier l'intégrateur 28 au générateur de rampe 30 soit directement, soit par l'intermédiaire d'un inverseur 34. L'asservissement ramène alors l'oscillation à la zone 1 (figure 1), le signal de modulation faisant alternativement passer le point de fonctionnement en 1 et 3.

L'inversion peut être commandée par une logique de comparaison et de commande 36 attaquant un compteur décompteur 38 dont le rôle apparaîtra plus loin.

Aussi longtemps que la phase $\phi_s$ reste comprise entre $+ \Pi/2$ et $+ 3\Pi/2$, l'oscillation du point de fonctionnement s'effectue à la zone $+ 1$, entre les points 1 et 3. Si $\phi_s$ dépasse $3\Pi/2$, il y a une nouvelle inversion du gain, qui revient à ce qu'il était dans la zone 0. Le point de fonctionnement oscille alors dans la zone $+ 2$.

Les modifications du signe du gain à partir de la zone 0 sont enregistrées, chaque fois avec l'indication si elles ont été provoquées par un dépassement de $+ \Pi/2$ ou un dépassement de $- \Pi/2$. Si on désigne par N le contenu du compteur décompteur 38 qui totalise les inversions de gain, la vitesse $\Omega$ sera alors donnée par :

$$\Omega = N \lambda_0 c_0 / 4 (LR) + (\lambda_0 nf / 2R)$$

qui se substitue à la formule (1) ci-dessus.

On voit que la fréquence de la rampe est ainsi limitée à $f = \pm 1/4\tau$, la résolution angulaire restant inchangée et égale à $n \lambda_0 / 2R$.

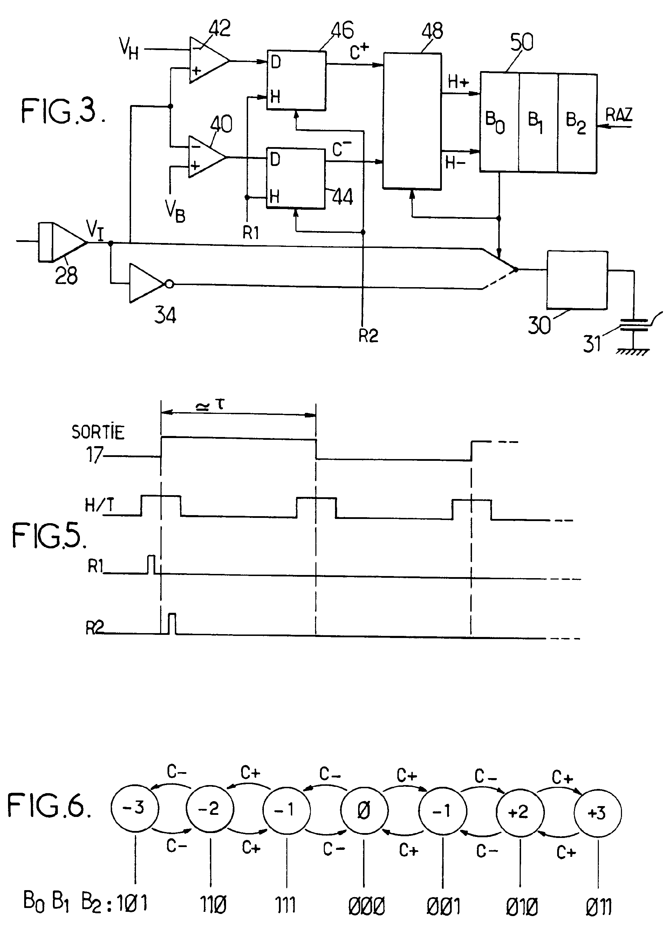

La figure 4 montre, à titre d'exemple, une évolution possible de la sortie de l'intégrateur 28, en fonction de la vitesse d'entrée en cas de mise en oeuvre de l'invention, pour deux cas particuliers correspondant l'un à une vitesse croissante, l'autre à une vitesse décroissante. Ce diagramme correspond au cas, préférable du point du vue du fonctionnement, où les inversions de rampe sont effectuées pendant les remises à zéro, à l'aide d'un circuit du genre montré en figure 3.

La logique de comparaison et de commande peut avoir la constitution montrée schématiquement en figure 3. Cette logique fonctionne suivant le graphe de la figure 6 et les signaux ont alors l'allure montrée sur la figure 5, où chaque ligne donne le signal correspondant au point portant la même référence en figure 3.

La logique de comparaison et de commande de la figure 3 comporte deux comparateurs d'entrée 40 et 42 qui reçoivent des tensions de référence sensiblement égales $V_H$ et $V_B$, respectivement sur leurs entrées négative et positive. Les valeurs de seuil $V_H$ et $V_B$ correspondent à des déphasages $\phi_s$ dûs à l'effet Sagnac légèrement supérieurs à $\Pi/2$, pour conduire au chronogramme montré en figure 4. Lorsque la tension de sortie $V_I$ de l'intégrateur 28 dépasse $V_H$, ce qui correspond à un accroissement de la vitesse de rotation, le comparateur 42 fournit un signal. Inversement, si $V_I$ devient suffisamment négatif pour être inférieur à $- V_B$, le comparateur 40 fournit un signal de sortie.

En adoptant pour $V_H$ et $V_B$ des valeurs absolues correspondant à des phases $\phi_s$ légèrement supérieures à $\Pi/2$ on évite le risque d'oscillations dans la commutation de gain lorsque la vitesse $\Omega$ est proche de celle qui correspond aux frontières entre zones. Cet écart se traduit par une diminution de la valeur absolue de la tension de sortie de l'intégrateur 28 après, chaque commutation par exemple de A en A' en cas de vitesse croissante (figure 4).

La phase $\phi_r$ change immédiatement de son côté de $\phi$ à $\phi'$ sur la figure 4.

Chacun des comparateurs 40 et 42 est suivi d'une bascule de verrouillage 44 ou 46, de type D dans le mode de réalisation illustré. Au premier coup d'horloge $R_1$, fourni par la base de temps 18, qui suit l'apparition du signal (prévu pour précéder légèrement la fin d'une alternance du signal de modulation), la bascule 46 fournit une impulsion C+. Une impulsion C- est fournie de même par la bascule 44 en réponse au signal éventuel provenant du comparateur 40. Les bascules sont remises à zéro par un signal $R_2$, suivant immédiatement la fin de chaque alternance du signal de modulation (figure 5). Dans le cas illustré, $R_1$ et $R_2$ sont émis pendant les périodes où le signal H/T est au niveau qui interdit la poursuite et mémorise la dernière détection. La durée de ce niveau doit être au moins égale à deux fois la différence maximale entre $\tau$ et la demi-période de modulation.

Une logique 48 reçoit les impulsions C+ et C- et fournit en réponse, sur l'une ou l'autre de deux sorties, des impulsions de comptage H+ et de décomptage H- suivant la table :

$$H^+ = C^+ \cdot \overline{B}_0) + (C^- \cdot B_0)$$
$$H^+ = (C^+ \cdot B_0) + (C^- \cdot \overline{B}_0)$$

où $B_0$ est le bit le moins significatif d'un compteur 50 qui accumule les impulsions de sortie. Ce cas est celui qui correspond à une arithmétique en complément à deux.

Le graphe de fonctionnement est alors celui montré en figure 6, où la ligne inférieure indique le contenu du compteur, dans le cas où il a une capacité maximale de 111 et où les opérations sont faites en complément à deux.

Le mode de réalisation qui vient d'être décrit a une constitution générale analogique. Il est également possible de le réaliser sous forme numérique à partir de la sortie du démodulateur 26.

## Revendications

1. Gyromètre comportant : un guide diélectrique d'onde en anneau ; une source d'ondes électromagnétiques munie d'un séparateur pour envoyer dans l'anneau deux ondes contrarotatives provenant de la source ; un détecteur d'interférence recevant les ondes contrarotatives ; des premiers moyens électro-optiques commandés pour donner aux ondes une modulation périodique alternative et symétrique de phase, à une période sensiblement double du temps de parcours de l'anneau, placés en amont de l'anneau pour une onde et en aval pour l'autre ; des seconds moyens attaqués par un générateur de rampe de déphasage de pente réglable, placés en amont de l'anneau pour une onde et en aval pour l'autre ; et des moyens électroniques de bouclage et de mesure commandant le sens et la valeur de la pente de la rampe pour annuler le déphasage des ondes reçues par le détecteur d'interférence,

caractérisé par des moyens pour inverser la pente de la rampe de déphasage, lorsque le déphasage dépasse + Π/2 ou - Π/2 et par des moyens pour compter algébriquement les changements de signe de la rampe.

2. Gyromètre suivant la revendication 1, caractérisé en ce que les moyens de comptage algébrique sont constitués par un compteur décompteur.

3. Gyromètre suivant la revendication 1 ou 2, caractérisé en ce que les moyens pour inverser la pente de la rampe sont prévus pour effectuer l'inversion pendant les périodes de remise à zéro de la rampe.

4. Gyromètre suivant la revendication 1, caractérisé en ce que les moyens de comptage algébrique comprennent deux comparateurs d'entrée (40,42) recevant les tensions de référence correspondant à des déphasages de sens inverse légèrement supérieur à Π/2, une logique (48) commandée par les comparateurs et un compteur-décompteur (50), la logique (48) étant prévue pour fournir au compteur des impulsions d'incrémentation H+ et de décrémentation H- en réponse aux impulsions C+ et C- reçues des comparateurs respectifs et suivant le bit le moins significatif du comparateur, suivant la table :
$$H^+ = (C \cdot \overline{B_0}) + (C^- \cdot B_0)$$
$$H\text{-} = (C^+ \cdot B_0) + (C^- \cdot \overline{B_0})$$

5. Gyromètre selon la revendication 4, caractérisé en ce que des bascules de verrouillage (44,46) sont interposées entre les comparateurs et la logique.

the counterrotating waves; first electro-optical means controlled to impart periodic alternating and symmetrical phase modulation to the waves at a period that is substantially twice the travel time round the ring, which means are placed upstream from the ring for one wave and downstream for the other; second means driven by a generator of a phase shift sawtooth of adjustable slope placed upstream from the ring for one wave and downstream from the ring for the other; and electronic feedback and measuring means controlling the direction and the value of the slope of the sawtooth to cancel the phase shift of the waves received by the interference detector;

characterized by means for reversing the slope of the phase shift sawtooth whenever the phase shift exceeds +π/2 or -π/2, and by means for algebraically counting the changes in the sign of the sawtooth.

2. A gyrometer according to claim 1, characterized in that the algebraic counting means are constituted by an up/down counter.

3. A gyrometer according to claim 1 or 2, characterized in that the means for reversing the slope of the sawtooth are designed to reverse the slope during periods while the sawtooth is being reset to zero.

4. A gyrometer according to claim 1, characterized in that the algebraic counting means comprise two input comparators (40,42) receiving reference voltages corresponding to phase shifts in opposite directions of slightly more than π/2, a logic circuit controlled by the comparators, and an up/down counters (50), the logic circuit (48) being designed to provide the counter with up pulses H+ and with down pulses H- in response to pulses C+ and C- received from the respective comparators, and depending on the least significant bit of the comparator, using the following table:
$$H+ = (C^+.B_0) + (C^-.B_0)$$
$$H+ = (C^+.B_0) + (C^-.B_0)$$

5. A gyrometer according to claim 4, characterized in that latching flip-flops (44,46) are interposed between the comparators and the logic circuit.

## Claims

1. A gyrometer comprising: a dielecric waveguide forming a ring; a source of electromagnetic waves provided with a splitter for sending two mutually counterrotating waves from the source round the ring; an interference detector receiving

## Patentansprüche

1. Gyrometer mit einer dielektrischen Wellenführung in Ringform, mit einer elektromagnetischen Wellenquelle, welche mit einem Separator zum Senden von zwei entgegengesetzt rotierenden, aus der Quelle stammenden Wellen in den Ring versehen ist, mit einem Interferenzdetektor, der die entgegengesetzt rotierenden Wellen empfängt, mit ersten elektrooptischen Mitteln, die derart gesteuert sind, daß sie den Wellen eine periodische, wechselnde und phasensymmetrische Modulation mit einer Periode geben, die etwa doppelt so lang wie die Zeit der Bahn des Ringes ist, wobei diese Mittel stromaufwärts des Ringes für eine Welle und stromabwärts für die andere Welle angeordnet sind, mit zweiten Mitteln, welche von einem Rampengenerator mit Phasenverschiebung mit regulierbarer Neigung beaufschlagt und stromaufwärts des Ringes für eine Welle und stromabwärts für die andere Welle angeordnet sind, und mit elektronischen Mitteln zur Schleifenschaltung und zur Messung, welche die Richtung und den Wert der Neigung der Rampe zur Annulierung der Phasenverschiebung der von dem Interferenzdetektor empfangenen Wellen steuern,
gekennzeichnet durch
Mittel zur Umkehrung der Neigung der Rampe mit Phasenverschiebung, während die Phasenverschiebung +Π/2 oder -Π/2 passiert, und durch Mittel zum algebraischen Zählen der Wechsel des (Vor-)Zeichens der Rampe.

2. Gyrometer nach Anspruch 1,
dadurch gekennzeichnet,
daß die Mittel zum algebraischen Zählen von einem Zähler-Abzieher gebildet sind.

3. Gyrometer nach Anspruch 1 oder 2,
dadurch gekennzeichnet,
daß die Mittel zum Umkehren der Neigung der Rampe vorgesehen sind, um die Umkehrung während der Perioden der Übergabe der Rampe bis Null zu bewirken.

4. Gyrometer nach Anspruch 1,
dadurch gekennzeichnet,
daß die Mittel zum algebraischen Zählen zwei Eingangskomparatoren (40,42), welche die mit den Phasenverschiebungen in umgekehrtem Sinn leicht oberhalb von Π/2 übereinstimmenden Referenzspannungen empfangen, und eine Logik (48) aufweisen, die durch die Komparatoren und einen Zähler-Abzieher (50) gesteuert wird, wobei die Logik (48) vorgesehen ist, um dem Zähler Zunahmeimpulse H+ und Abnahmeimpulse H- in Antwort auf Impulse C+ und C- zu liefern, welche jeweils von den Komparatoren und gemäß des am wenigsten signifikanten Bits des Komparators gemäß folgender Formel empfangen werden:

$$H+ = (C \cdot \overline{B}_0) + (C^- \cdot B_0)$$
$$H- = (C^+ \cdot B_0) + (C^- \cdot \overline{B}_0).$$

5. Gyrometer nach Anspruch 4,
dadurch gekennzeichnet,
daß Verriegelungselemente (44,46) zwischen den Komparatoren und der Logik angeordnet sind.

FIG.1.

FIG.4.

FIG.2.

FIG.3.

FIG.5.

FIG.6.